# FASCICULE DE BREVET EUROPEEN

(11) **EP 2 547 717 B1**
(45) Date de publication et mention de la délivrance du brevet: **04.03.2015**
(21) Numéro de dépôt: 11716973.0
(22) Date de dépôt: 15.03.2011
(51) Int. Cl.: B05D 5/00

(54) **PROCEDE DE FORMATION D'UN MOTIF SUR UNE SURFACE D'UN SUPPORT**
VERFAHREN ZUR BILDUNG EINER STRUKTUR AUF DER OBERFLÄCHE EINES SUBSTRATS
METHOD OF FORMING A PATTERN ON THE SURFACE OF A SUBSTRATE

(30) Priorité: 18.03.2010 FR 1001078
(43) Date de publication de la demande: 23.01.2013
(73) Titulaire: Centre National de la Recherche Scientifique, 75016 Paris (FR)
(72) Inventeur: SIRETANU, Igor, NL-7522 MJ Enschede (NL); CHAPEL, Jean-Paul, F-33000 Bordeaux (FR); DRUMMOND, Carlos, F-33300 Bordeaux (FR)
(74) Mandataire: Noel, Chantal Odile
(86) Numéro de dépôt international: PCT/FR2011/000139
(87) Numéro de publication internationale: WO 2011/114018

(56) Documents cités:
- WO-A1-2007/046110
- WU N ET AL: "Micro- and nano-patterns created via electrohydrodynamic instabilities", NANO TODAY, ELSEVIER, AMSTERDAM, NL, vol. 4, no. 2, 1 avril 2009 (2009-04-01), pages 180-192, XP026064460, ISSN: 1748-0132, DOI: 10.1016/J.NANTOD.2009.02.002 [extrait le 2009-03-09]
- MOON ET AL: "Controlled formation of nanoscale wrinkling patterns on polymers using focused ion beam", SCRIPTA MATERIALIA, ELSEVIER, AMSTERDAM, NL, vol. 57, no. 8, 28 juillet 2007 (2007-07-28), pages 747-750, XP022176500, ISSN: 1359-6462, DOI: DOI:10.1016/J.SCRIPTAMAT.2007.06.043

## Description

L'invention concerne une méthode de formation d'un motif sur la surface en un matériau macromoléculaire hydrophobe d'un substrat.

La formation de motifs, à l'échelle microscopique ou nanométrique, c'est-à-dire la formation de motifs dont au moins une dimension est de l'ordre de quelques dizaines de micromètres ou de nanomètres est d'un intérêt croissant au vu de la course à la miniaturisation de différents dispositifs tels que les circuits intégrés, les circuits magnétiques et mécaniques, les semi-conducteurs, les instruments à optique intégrée, les lab-on-a-chip, et dans le domaine de la micro-ou nano-fluidique.

Les motifs qui sont ainsi formés peuvent être utilisés pour réaliser toute une variété de fonctions, incluant des fonctions électriques, magnétiques, optiques, chimiques et/ou biologiques.

La lithographie est la méthode la plus ancienne connue pour créer de tels motifs, en particulier dans un film fin déposé sur un substrat.

Pour la fabrication de circuits intégrés, la photolithographie consiste à exposer deux couches de résine sensible à un rayonnement de particules énergétiques à travers un masque.

Le faisceau de particules modifie la structure chimique des zones exposées du film, qui sont ensuite développées.

Les zones exposées ou les zones non exposées de la résine sont ensuite éliminées pour créer le motif du masque sur la surface du film fin.

Le motif peut également être imprimé par pression sur la surface du substrat voulue.

La demande de brevet WO 00/21689 décrit une méthode lithographique pour créer des motifs ayant au moins une dimension inférieure au micromètre sur un substrat.

Pour cela, un masque est placé au dessus et à distance contrôlée d'un film en un matériau macromoléculaire déformable.

Le motif est alors créé sur le substrat en chauffant l'ensemble substrat-couche de matériau polymère-masque à une température au dessus de la température de transition vitreuse du matériau constituant la couche en un matériau polymère.

La demande WO 01/47003 décrit une méthode pour former un motif dans un film déposé sur un substrat qui consiste à placer au dessus du film sur lequel on veut créer le motif un masque comportant le motif voulu, le masque étant en un matériau ayant des propriétés diélectriques différentes du film sur lequel on veut former le motif, et l'application d'un champ électrique à l'interface entre le film et le masque pour produire une structure dans le film et le durcissement de la structure dans ce film pour former le film avec le motif voulu.

Cependant, toutes ces méthodes sont complexes à mettre en oeuvre et nécessitent l'emploi de nombreux appareillages et/ou sources d'énergies ainsi que de nombreux réactifs.

En contraste, l'invention propose une méthode très simple pour former des motifs sur la surface en un matériau macromoléculaire hydrophobe d'un substrat.

Cette méthode selon l'invention consiste à immerger la surface sur laquelle on veut former le motif dans une solution comprenant au moins 50 % en volume d'eau éventuellement en mélange avec un ou plusieurs solvants polaires ayant une constante diélectrique supérieure ou égale à 30.

La solution doit être une solution dégazée, c'est-à-dire contenant moins de 0,0001 mole de gaz dissous, par litre.

Les gaz dissous sont, par exemple O₂, N₂, CO₂, et d'une manière générale l'air.

La solution peut être dégazée par tout moyen voulu et en particulier par mise sous vide à une pression inférieure ou égale à -8000 Pa (-60 mm Hg), de préférence -93325 Pa (-700 mm Hg), pendant au moins trente minutes.

Cette solution doit de plus contenir une source d'ions solubles dans la solution. Cette source d'ions solubles peut être un ajusteur de pH ou un sel soluble dans la solution, ou encore un tensioactif soluble dans la solution et permettant de transporter des espèces ioniques.

Cette solution est constituée d'au moins 50 % en volume d'eau et, éventuellement d'un solvant ou d'un mélange de solvants liquides à la température à laquelle sera réalisée la nanostructuration.

Chaque solvant est polaire et a une constante diélectrique supérieure ou égale à 30.

A titre d'exemple de tels solvants, on citera la N-méthylpyrrolidone. Le plus préférablement, la solution est constituée uniquement d'eau.

Lorsque la source d'ions solubles est un ajusteur de pH, elle peut être, de manière connue de l'homme du métier, NaOH, KOH, HNO₃, HCl et les acides et les bases avec des ions de la série de Hoffmeister, décrite par exemple dans F. Hoffmeister Arch. Exp. Pathol. Pharmacol. 24, (1888) 247-260, et le sel peut être un sel tel que NaCl, KCl ou des sels avec des ions de la série de Hoffmeister (F. Hoffmeister Arch. Exp. Pathol. Pharmacol. 24, (1888) 247-260) ou des mélanges de ceux-ci.

Le pH de la solution obtenue peut varier entre 1,5 et 12, le pH affectant la taille des reliefs formés sur la surface.

Mais la source d'ions peut ne pas affecter le pH. Dans ce cas, la source d'ions est un sel ou un mélange de sels solubles dans la solution, qui peut alors, en particulier, avoir un pH neutre.

Des exemples particulièrement préférés de ces sels sont les sels d'ammonium quaternaires, par exemple les chlorures ou bromures ou iodures ou nitrates de tétrabutyl ammonium, les sels de lithium tels que, par exemple les fluorures ou bromures ou iodures de lithium, et les mélanges de deux ou plus de ceux-ci. Les sels NaCl et/ou KCl peuvent également être utilisés.

La source d'ions peut également être un tensioactif ou un mélange de tensioactifs.

Un exemple de tensioactif utilisable en tant que source d'ions est le bromure de didécyldiméthylammonium (DDAB).

Quant à la surface sur laquelle le motif est à former, il faut que cette surface soit en un matériau macromoléculaire hydrophobe.

Il faut de plus que le matériau soit susceptible de subir des déformations de l'ordre de quelques nanomètres, plus précisément de entre 1 et 10 nm en hauteur et en largeur sur une profondeur d'environ 20 nm, à sa surface.

Cette « déformabilité » correspond à une mobilité moléculaire plus élevée à la surface de ce matériau.

De tels matériaux sont par exemple des protéines, des polymères thermoplastiques non réticulés amorphes, ayant un angle de contact avec l'eau supérieur à 70°, tel que le polystyrène (PS), le polycarbonate (PC), le polyéthylène téréphthalate (PET), le polyétherétherkétone (PEEK), le polyphénylène éther (PPE), le polyéthylène imine (PEI), un perfluoroalkoxy (Teflon^{®} PFA), le polychlorure de vinyle (PVC), les résines bicomposants, telles que les résines polyuréthanes (PU) provenant de la polymérisation de polyols avec des isocyanates et les résines polyépoxydes provenant de la polymérisation de résines époxydes avec des polyamines.

Parmi les isocyanates on peut citer les isocyanates aromatiques tel que le diisocyanate de toluène (TDI), et le diphénylméthane diisocyanate (MDI), les isocyanates aliphatiques tel que le 1,6-hexaméthylène diisocyanate (HDI), le 1-isocyanato-3-isocyanatométhyl-3,5,5-triméthyl-cyclohexane (isophorone diisocyanate, IPDI), et le 4,4'-diisocyanato dicyclohexylméthane (H12MDI).

Parmi les polyols on peut citer les polycarbonates polyols, les polycaprolactones polyols, les polybutadiènes polyols, et les polysulfides polyols.

Parmi les époxydes on peut citer le di-glycidyle éther du bisphénol A.

Parmi les polyamines on peut citer les polyamines aromatiques tels que la méthylènedianiline (MDA), la 4,4'-méthylène-bis-(3-chloro-2,6-diéthylaniline) (MCDEA), la diéthyltoluènediamine (DETDA), la 4,4'-méthylène-bis-(2-éthyl-6-méthyl-aniline) (NMMEA), la 4,4'-méthylène-bis-(2,6-diéthylaniline) (MDEA), et la 4,4'-méthylène-bis-(2-isopropyl-6-méthyl-aniline).

On peut également citer à titre de matériau macromoléculaire hydrophobe la résine commercialisée sous la marque EPON^{®} resin SU-8 photoresist, et le polydiméthylsiloxane (PDMS).

De préférence, on utilisera du polystyrène ou du PDMS.

La surface peut être un film d'un tel matériau déposé sur un support, par exemple en silicium ou en mica ou en tout autre matériau.

Mais le substrat peut lui-même être entièrement constitué du matériau macromoléculaire hydrophobe.

La surface peut être une surface plane ou courbe, convexe ou concave.

Il peut s'agir de la surface de particules d'un matériau macromoléculaire hydrophobe.

Ce matériau doit cependant être déformable, à sa surface sur une profondeur d'au moins 20 nm.

La déformation crée la nanostructuration qui peut être conservée après retrait de la surface de la solution aqueuse ou devoir être « figée » après sa création.

Pour les polymères non réticulés, cela peut être obtenu par réticulation des polymères.

Pour créer des motifs de forme voulue, l'invention propose de déposer un masque en un matériau résistant à la solution au pH voulu et comportant le motif voulu en négatif ou en positif, selon le cas, de façon à créer des zones qui ne seront pas en contact avec la solution aqueuse.

La température de la solution peut aller de la température ambiante, c'est-à-dire d'une température comprise entre 20 et 25°C jusqu'à une température inférieure au point d'ébullition de la solution à la pression à laquelle la nanostructuration est réalisée.

Par exemple, lorsque la solution est de l'eau, on pourra travailler jusqu'à une température de 150 °C en réalisant le nanostructuration dans un autoclave à une pression de 500 000 Pa (5 bars).

La température, tout comme le pH permet d'obtenir des reliefs, qui apparaîtront dans les zones exposées à la solution, d'une hauteur et largeur variables.

Le temps de contact de la surface avec la solution permet également d'obtenir des reliefs plus ou moins hauts et plus ou moins larges.

Ainsi, l'invention propose une méthode de formation d'un motif sur la surface d'un substrat caractérisée en ce que :
- ladite surface est en un matériau macromoléculaire hydrophobe, et
- elle comprend une étape a) d'immersion d'au moins ladite surface du substrat dans une solution comprenant au moins 50 % en volume d'eau et, optionnellement un ou plusieurs solvants polaires ayant une constante diélectrique supérieure à 30 et contenant moins de 0,0001 mole/L de gaz dissous et une source d'ions.

Dans une variante préférée, la solution est constituée d'eau et de la source d'ions.

Dans ce cas, l'étape a) est réalisée à un pH compris entre 1,5 et 12 inclus, à une température comprise entre 20°C et 150°C inclus et une pression comprise entre 100 000 et 500 000 Pa (1 et 5 bars).

Dans toutes les variantes de la méthode de l'invention, dans un premier mode de mise en oeuvre, le substrat est constitué d'un support recouvert d'une couche en un matériau macromoléculaire hydrophobe ou de particules d'un matériau macromoléculaire hydrophobe.

Dans un second mode de mise en oeuvre de toutes les variantes du procédé de l'invention, le substrat est entièrement en un matériau macromoléculaire hydrophobe.

Ledit matériau macromoléculaire hydrophobe est de préférence choisi parmi le polystyrène (PS) et le polydiméthylsiloxane (PDMS).

Selon une variante de la méthode de l'invention, avant de réaliser l'étape a), ladite surface du substrat est recouverte d'un masque comportant en positif ou en négatif le motif que l'on veut former sur ladite surface.

Sans vouloir être liés par cette théorie, les inventeurs expliquent la création des reliefs par le procédé de l'invention par le fait que, comme cela est bien connu, une couche à faible densité d'eau (cavité, nano-bulles) se forme lorsque l'eau est en contact avec une interface hydrophobe et que les ions hydroxydes (OH⁻) ou les ions hydronium (H₃O⁺) sont préférentiellement adsorbés à cette interface dont la densité d'eau est plus faible, selon le pH de la solution. Ainsi, les inventeurs ont constaté que les ions et les espèces chimiques qui s'adsorbent le mieux à cette interface ont le plus grand pouvoir structurant.

L'étape d'élimination des gaz, tels que de l'air, O₂, N₂ et CO₂, dissous dans la solution (les bulles) *via* l'étape de dégazage, entraîne la diminution de, et peut même rendre nulle, la taille des régions non en contact avec l'eau.

Les ions chargés hydroxyde (OH⁻) ou hydronium (H₃O⁺) sont alors capables de s'adsorber plus fortement la surface du matériau macromoléculaire hydrophobe créant ainsi localement un champ électrique extrêmement élevé de l'ordre de 10⁷V/m.

Dès lors, si la surface qui est en contact avec l'eau est déformable, la force électrostatique générée *via* le champ électrique élevé créera des reliefs sur le plan de la surface.

Cette force sera bien sûr équilibrée par la pression de Laplace (énergie de surface) tendant à maintenir l'interface aussi plate que possible.

Cette instabilité se développant à cette interface est connue comme l'instabilité électro-hydrodynamique (EHI).

La EHI est augmentée dans le cadre de l'eau dégazée.

L'intensité de cette instabilité dépend du pH.

La concentration en les ions OH⁻ ou H₃O⁺ conditionne la quantité de charges apparaissant à l'interface à un pH donné.

A pH neutre, où la concentration des deux ions OH⁻ ou H₃O⁺ n'est pas très élevée, des sels ajoutés tels que NaCl et KCl, les sels d'ammonium quaternaires (en particulier ceux précédemment cités), les sels de lithium (en particulier ceux précédemment cités), les mélanges de deux ou plus de tels sels ainsi qu'un tensioactif ou un mélange de tensioactifs, en particulier le DDAB, agiront de façon similaire. Les sels tels que NaCl et KCl peuvent également être utilisés. Cependant, on préférera utiliser les sels d'ammonium quaternaires et les sels de lithium et leurs mélanges qui ont de meilleurs propriétés structurantes que NaCl et KCI.

Afin de mieux faire comprendre l'invention, on va maintenant en décrire ci-après, à titre d'exemples purement illustratifs et non limitatifs plusieurs modes de mise en oeuvre.

Dans ces exemples, la mesure de rugosité de surface à été effectuée sur les images AFM de topographie de la surface, sur 1 µm².

La valeur obtenue correspond à la moyenne quadratique des valeurs des hauteurs de rugosités sur cette surface.

### Exemple 1

Des couches minces de polystyrène d'une épaisseur d'environ 200 nm ayant une rugosité quadratique moyenne de moins de 1 à 2 nm de profondeur ont été générés sur une tranche de silicium portant une couche d'oxyde natif et préalablement silanisées pour éviter tout démouillage du film fin de PS.

Les couches minces de polystyrène ont été générées à partir d'une solution à 5% en poids de polystyrène ayant un poids moléculaire de 250 kg/mol dans du toluène par revêtement à la tournette (« spin-coating »), à une vitesse radiale comprise entre 1500 à 5000 tr/min.

Les films ont été ensuite recuit une nuit à 160°C, c'est-à-dire au dessus de la température de transition vitreuse du polystyrène pour libérer toute contrainte résiduelle produite pendant le dépôt à la tournette et pour éliminer le toluène résiduel.

L'uniformité de la couche de référence a été vérifiée en utilisant un microscope à force atomique (AFM).

Ces surfaces sont ensuite immergées dans différentes solutions aqueuses fabriquées à partir d'eau non dégazée et ayant un pH variant de pH 1,5 (acidifié avec de l'acide nitrique HNO₃) à pH 12 (basifié avec de l'hydroxyde de sodium NaOH).

Les surfaces des films de polystyrène ont été laissées en contact avec la solution pendant 5 minutes à 24 heures.

Les images obtenues par AFM ont été prises sur les surfaces séchées et dans l'air.

Comme attendu, le traitement avec les solutions aqueuses non dégazées ne change pas la texture/rugosité de la surface de polystyrène en comparaison à l'échantillon de référence qui n'avait subi aucun traitement.

Le même type d'expérience a été effectué avec des solutions préalablement dégazées (mise sous vide ordinaire pendant 2 heures à une pression d'environ 93325 Pa (-700mm de Hg)).

On voit alors apparaître une nanostructure en relief aussi bien au pH élevé qu'au pH faible.

Ainsi, à pH 1,5, on obtient des reliefs d'une hauteur de 2,6 nm et d'une largeur de 23 nm.

A pH 2,5, on obtient des reliefs ayant une hauteur de 1,3 nm et une largeur de 15 nm.

A pH 7,0, on obtient des reliefs ayant une hauteur de 0,6 nm une largeur de 10 nm.

A pH 9,2, on obtient des reliefs d'une hauteur de 1,4 nm et d'une largeur de 15 nm.

A pH 11,3, on obtient des reliefs d'une hauteur de 2,2 nm et d'une largeur de 40 nm.

La nanostructure créée est durable dans l'air pendant plusieurs semaines.

### Exemple 2

Des films fins de polystyrène crées comme à l'exemple 1 ont été chauffés à 65°C et immergés pendant 5 minutes dans une solution à pH 1,5 préalablement dégazée et chauffée à 65°C.

Les photographies obtenues par AFM montrent que les reliefs sont plus hauts (8,5 nm) et plus larges (85 nm) que ceux obtenus dans les mêmes conditions avec une solution dégazée mais à température ambiante.

### Exemple 3

On a ensuite, immédiatement après leur fabrication, réticulés des échantillons obtenus par la méthode décrite à l'exemple 1, par polymérisation par UV (longueur d'onde 300 nm).

Aucune disparition ou relaxation des structures en relief n'était observable après un mois.

### Exemple 4

On a fabriqué des substrats recouverts d'un film mince de polystyrène fabriqués comme à l'exemple 1.

Ces substrats ont été immergés dans une solution aqueuse de pH neutre (pH = 5,6) c'est-à-dire ne contenant pas un ajusteur de pH mais 0.03M/L de NaCl.

Des reliefs étaient également générés qui avaient une hauteur et une largeur qui augmentaient avec le temps d'immersion.

### Exemple comparatif

Le polystyrène est un matériau hydrophobe avec un angle de contact avec l'eau d'environ 90 degrés.

Pour montrer que la méthode de l'invention ne peut s'appliquer qu'aux matériaux hydrophobes, un film de polystyrène préparé comme à l'exemple 1 a été soumis à une irradiation UV pendant 15 minutes (longueur d'onde 200 nm).

La surface de ce film était ainsi rendue hydrophile : l'angle de contact avec l'eau était inférieur à 30 degrés.

La surface a ensuite été immergée dans une solution acide dont l'eau avait été dégazée pendant 30 minutes.

On ne voyait aucune formation de structure en relief.

### Exemple 5

Cet exemple montre qu'il est possible de régénérer les surfaces nanostructurées dans le cas où les nanostructures n'ont pas été figées, par exemple par réticulation.

Là, on peut utiliser un recuit en température ou un solvant pour lisser à nouveau la surface.

Ainsi, à cet exemple, la surface d'un échantillon obtenu à l'exemple 1 a été recuite à 100°C pendant 2 heures.

La nanostructure formée se relaxait et même disparaissait avec le temps.

La surface ainsi régénérée a ensuite été réimmergée dans une solution aqueuse acide dégazée et une nouvelle nanostructure était générée.

La même expérience a été renouvelée mais en soumettant la surface nanostructurée à de la vapeur de toluène saturé pendant 15 minutes.

Le nanostructure se relaxait et disparaissait également en fonction du temps.

La surface régénérée pouvait ensuite être renanostructurée avec le même traitement acide.

### Exemple 6 : Nanostructuration d'un substrat en polydiméthylsiloxane (PDMS)

Le PDMS est communément utilisé en tant que résine d'estampage dans la procédure de lithographie douce, ce qui en fait un des matériaux les plus communs utilisés dans des systèmes à haut flux comme les puces microfluidiques.

Un substrat en PDMS a été préparé en versant de la résine (Sylgard 184, de Dow) et un agent de réticulation (10 :1) dans une boîte de Pétri.

Le mélange a été vigoureusement mélangé et mis sous vide pendant 20 minutes pour éliminer toute bulle.

Cette qualité de PDMS est connue pour réticuler complètement en 4 heures à 65°C.

Dès lors, la boîte de Petri a été placée dans une étuve pendant 1 heures à 60°C pour obtenir une couche ayant une intégrité mécanique.

La boîte de Petri a ensuite été immergée dans une solution aqueuse acidifiée à pH 1,5 dégazée et maintenue dans l'étuve pendant 3 heures pour réticuler complètement le PDMS.

Les images obtenues par AFM ont été prises ensuite sur le substrat de PDMS de référence non traité par la solution aqueuse dégazée et sur celui traité.

La surface de l'échantillon de référence était lisse avec une rugosité (moyenne quadratique) de 0,4 nm et celle de l'échantillon traité présentait des reliefs en surface lui conférant une rugosité (moyenne quadratique) de 1,5 nm.

### Exemple 7 : Nanostructuration sur des colloïdes

Le procédé de l'invention peut également être appliqué sur des particules (matière divisée).

Ainsi, des billes de polystyrène monodispersées (d'une taille de 0,4 µm) ont été déposées par trempage dans une solution aqueuse concentrée (10 g/l) sur la surface d'un substrat en mica lisse.

Les images obtenues par AFM montrent la surface nue de ces sphères de polystyrène qui ne comporte aucun relief.

Le substrat a ensuite été immergé dans une solution aqueuse dégazée acidifiée à l'acide nitrique à pH 1,5 pendant 5 minutes à 25°C

L'image par AFM de ce substrat montre que les sphères de polystyrène ont une surface présentant des reliefs ayant une hauteur de 0,5 nm et une largeur de 13 nm, après le traitement.

La même expérience a été réalisée en utilisant la même solution que précédemment mais en chauffant à 65 °C.

Les reliefs formés étaient, comme attendu, plus hauts (1,0 nm) et plus larges (25 nm) que sur l'échantillon traité à température anbiante (25°C).

### Exemple 8 : Nanostructuration multi-échelle

Cet exemple montre le potentiel de la nanostructuration par de l'eau pour générer des surfaces avec des rugosités à plusieurs échelles utilisables dans différentes technologies tels que la tribologie, l'adhésion, la fluidification etc...

Dans une première étape, des films fins de polystyrène revêtus à la tournette sur des substrats en silicium dont la surface avait été préalablement réticulée, ont été nanostructurés en surface en utilisant l'approche de contrainte osmotique décrite dans Chung, J. Y., A. J. Nolte, et al. (2009). "Diffusion-Controlled, Self-Organized Growth of Symmetric Wrinkling Patterns." Advanced Materials 21(13): 1358-1362.

Des anneaux concentriques de polystyrène ont été obtenus.

Une deuxième rugosité a été générée en une seconde étape en appliquant, sur les anneaux formés à la première étape, le même protocole.

Finalement, une rugosité ternaire a été générée par immersion de la surface bistructurée obtenue préalablement dans une solution acide dégazée.

L'image par AFM obtenue de cet échantillon montre qu'on a obtenu une rugosité ternaire.

### Exemple 9 : Création d'un motif par pressage d'un masque

Une solution de PDMS a été versée sur la surface d'une tranche de silicium qui avait été préalablement structurée avec des créneaux, des carrés et des rectangles en utilisant une méthode de lithographie à photo-résine conventionnelle.

Après la polymérisation thermique (4 heures à 75°C), la couche de PDMS réticulée a été décollée.

Elle portait clairement sur sa surface le motif de la tranche de silicium en négatif.

Ce masque de PDMS a ensuite été pressé sur la surface d'un film fin de polystyrène et l'assemblage a été immergé dans une solution aqueuse acide dégazée.

La solution aqueuse mouillait des régions de la surface de polystyrène qui n'était pas en contact avec le masque.

Après 5 minutes, des bandes, des carrés et des rectangles, en relief, étaient générés facilement suivant le motif original, sur la surface du film de polystyrène.

## Revendications

1. Méthode de formation d'un motif sur la surface d'un substrat **caractérisée en ce que** :
- ladite surface est en un matériau macromoléculaire hydrophobe, et
- elle comprend une étape a) d'immersion d'au moins ladite surface du substrat dans une solution comprenant au moins 50 % en volume d'eau et, optionnellement un ou plusieurs solvants polaires ayant une constante diélectrique supérieure à 30, et contenant moins de 0,0001 mole/L de gaz dissous et une source d'ions.

2. Méthode selon la revendication 1 **caractérisée en ce que** la source d'ions est un acide ou une base.

3. Méthode selon la revendication 1 **caractérisée en ce que** la source d'ions est un sel d'un acide ou d'une base.

4. Méthode selon la revendication 1 **caractérisée en ce que** la source d'ions est choisie parmi NaCl, KCI, les sels d'ammonium quaternaires, les sels de lithium et les mélanges de deux au moins de ceux-ci, de préférence parmi les sels d'ammonium quaternaires, les sels de lithium et les mélanges de deux au moins de ceux-ci.

5. Méthode selon la revendication 1 **caractérisée en ce que** la source d'ions est un tensioactif ou un mélange de tensioactifs, de préférence le bromure de didécyldiméthylammonium.

6. Méthode selon l'une quelconque des revendications précédentes **caractérisée en ce que** le solvant est de l'eau.

7. Méthode selon la revendication 6 **caractérisée en ce que** l'étape a) est réalisée à un pH compris entre 1,5 et 12 inclus à une température comprise entre 20°C et 150°C inclus et à une pression comprise entre 100 000 et 500 000 Pa (1 et 5 bars).

8. Méthode selon l'une quelconque des revendications précédentes **caractérisée en ce que** le substrat est constitué d'un support recouvert d'une couche en un matériau macromoléculaire hydrophobe ou de nanoparticules d'un matériau macromoléculaire hydrophobe.

9. Méthode selon l'une quelconque des revendications 1 à 7 **caractérisée en ce que** le substrat est entièrement en un matériau macromoléculaire hydrophobe.

10. Méthode selon l'une quelconque des revendications précédentes **caractérisée en ce que** ledit matériau macromoléculaire hydrophobe est choisi parmi le polystyrène (PS) et le polydiméthylsiloxane (PDMS).

11. Méthode selon l'une quelconque des revendications précédentes **caractérisée en ce qu'**avant de réaliser l'étape a), ladite surface du substrat est recouverte d'un masque comportant en positif ou en négatif le motif que l'on veut former sur ladite surface.

## Patentansprüche

1. Verfahren zur Bildung eines Musters auf der Oberfläche eines Substrats, **dadurch gekennzeichnet, dass**:
- die Oberfläche aus einem hydrophoben makromolekularen Material ist, und
- es einen Schritt a) des Eintauchens wenigstens der Oberfläche des Substrats in eine Lösung umfasst, die wenigstens 50 Vol-% Wasser und wahlweise ein oder mehrere polare Lösemittel mit einer Dielektrizitätskonstante über 30 umfasst, und die wenigstens 0,0001 mol/l gelöstes Gas und eine Ionenquelle enthält.

2. Verfahren nach Anspruch 1, **dadurch gekennzeichnet, dass** die Ionenquelle eine Säure oder eine Base ist.

3. Verfahren nach Anspruch 1, **dadurch gekennzeichnet, dass** die Ionenquelle ein Salz einer Säure oder einer Base ist.

4. Verfahren nach Anspruch 1, **dadurch gekennzeichnet, dass** die Ionenquelle ausgewählt ist aus NaCl, KCl, quartären Ammoniumsalzen, Lithiumsalzen und Mischungen von wenigstens zwei von diesen, vorzugsweise aus quartären Ammoniumsalzen, Lithiumsalzen und Mischungen von wenigstens zwei von diesen.

5. Verfahren nach Anspruch 1, **dadurch gekennzeichnet, dass** die Ionenquelle ein Tensid oder eine Tensidmischung ist, vorzugsweise Didecyldimethylammoniumbromid.

6. Verfahren nach einem der vorhergehenden Ansprüche, **dadurch gekennzeichnet, dass** das Lösemittel Wasser ist.

7. Verfahren nach Anspruch 6, **dadurch gekennzeichnet, dass** Schritt a) bei einem pH zwischen einschließlich 1,5 und 12, bei einer Temperatur zwischen einschließlich 20°C und 150°C und bei einem Druck zwischen einschließlich 100 000 und 500 000 Pa (1 und 5 bar) durchgeführt wird.

8. Verfahren nach einem der vorhergehenden Ansprüche, **dadurch gekennzeichnet, dass** das Substrat aus einem Träger besteht, der mit einer Schicht aus einem hydrophoben makromolekularen Material oder aus Nanopartikeln aus einem hydrophoben makromolekularen Material bedeckt ist.

9. Verfahren nach einem der Ansprüche 1 bis 7, **dadurch gekennzeichnet, dass** das Substrat vollständig aus einem hydrophoben makromolekularen Material ist.

10. Verfahren nach einem der vorhergehenden Ansprüche, **dadurch gekennzeichnet, dass** das hydrophobe makromolekulare Material ausgewählt ist aus Polystyrol (PS) und Polydimethylsiloxan (PDMS).

11. Verfahren nach einem der vorhergehenden Ansprüche, **dadurch gekennzeichnet, dass** die Oberfläche des Substrats vor Durchführung von Schritt a) mit einer Maske bedeckt wird, die das Muster, das auf der Oberfläche gebildet werden soll, als Positiv oder Negativ umfasst.

## Claims

1. Method of forming a pattern on the surface of a substrate **characterized in that**:
- said surface consists of a hydrophobic macromolecular material, and
- it comprises a step a) of immersing at least said substrate surface in a solution comprising at least 50% by volume of water and optionally comprising one or more polar solvents having a dielectric constant greater than 30 and containing less than 0.0001 mol/L of dissolved gas and an ion source.

2. Method according to claim 1 **characterized in that** the ion source is an acid or a base.

3. Method according to claim 1 **characterized in that** the ion source is a salt of an acid or a base.

4. Method according to claim 1 **characterized in that** the ion source is selected from NaCl, KCl, quaternary ammonium salts, lithium salts and mixtures of at least two thereof, preferably from quaternary ammonium salts, lithium salts and mixtures of at least two thereof.

5. Method according to claim 1 **characterized in that** the ion source is a surfactant or mixture of surfactants, preferably didecylmethylammonium bromide.

6. Method according to any one of the preceding claim **characterized in that** the solvent is water.

7. Method according to claim 6 **characterized in that** step a) is carried out at a pH between 1.5 and 12 inclusive at a temperature between 20 °C and 150 °C inclusive and at a pressure between 100 000 and 500 000 Pa (1 and 5 bar).

8. Method according to any one of the preceding claim **characterized in that** the substrate is made of a support covered with a layer of a hydrophobic macromolecular material or of nanoparticles of a hydrophobic macromolecular material.

9. Method according to any one of claims 1 to 7 **characterized in that** the substrate is entirely made of a hydrophobic macromolecular material.

10. Method according to any one of the preceding claim **characterized in that** said hydrophobic macromolecular material is selected from polystyrene (PS) and polydimethylsiloxane (PDMS).

11. Method according to any one of the preceding claim **characterized in that** before performing step a), said substrate surface is covered with a mask comprising the positive or negative pattern to be formed on said surface.
